# EUROPEAN PATENT APPLICATION

(11) **EP 4 545 830 A1**
(43) Date of publication of application: **30.04.2025**
(21) Application number: 23827071.4
(22) Date of filing: 14.06.2023
(51) Int. Cl.: F16K 31/04, H02P 8/36, F16K 37/00, F16K 51/00

(54) **MOTORIZED VALVE CONTROL DEVICE AND MOTORIZED VALVE DEVICE**

(30) Priority: 24.06.2022 JP 2022101861
(71) Applicant: Fujikoki Corporation, Tokyo 158-0082 (JP)
(72) Inventor: HAGIMOTO Hiroshi, Tokyo 158-0082 (JP); NARUKAWA Bunta, Tokyo 158-0082 (JP)
(74) Representative: Ter Meer Steinmeister & Partner
(86) International application number: PCT/JP2023/022038
(87) International publication number: WO 2023/248885

(57) **Abstract**

[OBJECT] To provide an electric valve control device and an electric valve device that are capable of more accurately detecting a failure in a stepping motor of an electric valve.

[SOLUTION] An electric valve device (1) includes an electric valve (5) and an electric valve control device (100). The electric valve (5) includes a stepping motor (66). The stepping motor (66) includes a magnet rotor (31), an A-phase stator (61), and a B-phase stator (62). The electric valve control device (100) uses a PWM method to control an A-phase current (Ia) supplied to an A-phase coil (61c) of the A-phase stator (61) and a B-phase current (Ib) supplied to a B-phase coil (62c) of the B-phase stator (62). The electric valve control device (100) compares an A-phase duty cycle (Da) for the A-phase current (Ia) with a B-phase duty cycle (Db) for the B-phase current (Ib) to detect a malfunction in the A-phase coil (61c) or the B-phase coil (62c).

## Description

### Technical Field

The present invention relates to an electric valve control device and an electric valve device including an electric valve and the electric valve control device.

### Background Art

Patent Literature 1 discloses an example of an electric valve according to the related art. The electric valve includes a case, a magnet rotor, and a stator. The magnet rotor is disposed inside the case. The stator is disposed outside the case. The magnet rotor and the stator are members of a stepping motor.

The electric valve is, for example, installed in an air conditioning system and is used to control the flow rate of refrigerant. The stator of the electric valve contains a coil, and a malfunction may occur in the coil. The malfunction may involve a short circuit, a layer short circuit, or a disconnection. When the malfunction occurs in the coil, the electric valve may operate abnormally. Citation List

### Patent Literature

Patent Literature 1: Japanese Unexamined Patent Application Publication No. 2018-179133
Patent Literature 2: Japanese Unexamined Patent Application Publication No. 2020-178500

### Summary of Invention

### Technical Problem

Patent Literature 2 discloses an example of a failure diagnosis device that can detect a short circuit in a coil of a stepping motor. The failure diagnosis device detects the short circuit using the magnitude of a current flowing through the coil. However, fluctuations in the driving voltage or ambient temperature of the stepping motor may change the magnitude of the current flowing through the coil. This may cause the failure diagnosis device to erroneously detect a failure in the stepping motor.

Accordingly, it is an object of the present invention to provide an electric valve control device and an electric valve device that are capable of more accurately detecting a failure in a stepping motor of an electric valve.

### Solution to Problem

To achieve the object above, an electric valve control device according to one aspect of the present invention is an electric valve control device for controlling an electric valve. The electric valve includes a valve body that has a valve chamber, a valve member that is disposed in the valve chamber, and a stepping motor for moving the valve member. The stepping motor includes a magnet rotor, an A-phase stator, and a B-phase stator. The electric valve control device is configured to use a PWM method to control an A-phase current supplied to an A-phase coil of the A-phase stator and a B-phase current supplied to a B-phase coil of the B-phase stator. A duty cycle for the A-phase current is referred to as an A-phase duty cycle, and a duty cycle for the B-phase current is referred to as a B-phase duty cycle. The electric valve control device is configured to compare the A-phase duty cycle with the B-phase duty cycle to detect a malfunction in the A-phase coil or the B-phase coil.

In the present invention, preferably, the electric valve control device is configured to compare the A-phase duty cycle for the A-phase current with the B-phase duty cycle for the B-phase current. The A-phase current is controlled to match an A-phase current target value. The B-phase current is controlled to match a B-phase current target value having a magnitude equal to a magnitude of the A-phase current target value.

In the present invention, preferably, the electric valve control device is configured to compare the A-phase duty cycle with the B-phase duty cycle when the A-phase current and the B-phase current are controlled so that the magnet rotor rotates.

In the present invention, preferably, multiple pulses have a sequential order, and an A-phase current target value and a B-phase current target value are set for each of the multiple pulses. Preferably, when the A-phase current matching the A-phase current target value set for each of the multiple pulses is supplied to the A-phase coil in the sequential order and the B-phase current matching the B-phase current target value set for each of the multiple pulses is supplied to the B-phase coil in the sequential order, the magnet rotor rotates. Preferably, the electric valve control device is configured to compare the A-phase duty cycle for the A-phase current with the B-phase duty cycle for the B-phase current. The A-phase current is controlled to match the A-phase current target value set for one pulse of the multiple pulses. The B-phase current is controlled to match the B-phase current target value set for another pulse of the multiple pulses and having a magnitude equal to a magnitude of the A-phase current target value set for the one pulse.

To achieve the object above, an electric valve control device according to another aspect of the present invention is an electric valve control device for controlling an electric valve. The electric valve includes a valve body that has a valve chamber, a valve member that is disposed in the valve chamber, and a stepping motor for moving the valve member. The stepping motor includes a magnet rotor, an A-phase stator, and a B-phase stator. The electric valve control device is configured to use a PWM method to control an A-phase voltage supplied to an A-phase coil of the A-phase stator and a B-phase voltage supplied to a B-phase coil of the B-phase stator. The electric valve control device is configured to compare a duty cycle for the A-phase voltage with a duty cycle for the B-phase voltage to detect a malfunction in the A-phase coil or the B-phase coil.

To achieve the object above, an electric valve device according to still another aspect of the present invention includes the electric valve and the electric valve control device.

### Advantageous Effects of Invention

The electric valve control device is configured to use the PWM method to control the A-phase current supplied to the A-phase coil of the A-phase stator and the B-phase current supplied to the B-phase coil of the B-phase stator. The electric valve control device is configured to compare the duty cycle for the A-phase current (the A-phase duty cycle) with the duty cycle for the B-phase current (the B-phase duty cycle) to detect the malfunction in the A-phase coil or the B-phase coil.

In a configuration in which the PWM method is used to control a current supplied to a coil, a change in the resistance and the inductance of the coil affects the duty cycle of a PWM signal. The resistance and the inductance of the coil are referred to as impedance. For example, when the driving voltage or ambient temperature of the stepping motor fluctuates, both the A-phase duty cycle and the B-phase duty cycle are affected. In this situation, the relationship between the A-phase duty cycle and the B-phase duty cycle remains unchanged. When the malfunction occurs in the A-phase coil or the B-phase coil, the impedance of the A-phase coil or the impedance of the B-phase coil changes, affecting the A-phase duty cycle or the B-phase duty cycle. In this situation, the relationship between the A-phase duty cycle and the B-phase duty cycle changes. Consequently, when the electric valve control device compares the A-phase duty cycle with the B-phase duty cycle and detects a change in the relationship between the A-phase duty cycle and the B-phase duty cycle, the electric valve control device can determine that the malfunction has occurred in the A-phase coil or the B-phase coil. Therefore, an erroneous detection of the malfunction in the coil due to fluctuations in the driving voltage or ambient temperature of the stepping motor can be inhibited, resulting in a more accurate detection of a failure in the stepping motor.

### Brief Description of Drawings

[Fig. 1] Fig. 1 is a block diagram of an air conditioning system including an electric valve device according to an embodiment of the present invention.
[Fig. 2] Fig. 2 is a sectional view of the electric valve device.
[Fig. 3] Fig. 3 is a diagram illustrating a magnet rotor and a stator that are included in the electric valve device.
[Fig. 4] Fig. 4 is a diagram illustrating a microcomputer, a stepping motor, and a magnetic sensor that are included in the electric valve device.
[Fig. 5] Fig. 5 is a diagram illustrating a CPU and a motor driver that are included in the microcomputer.
[Fig. 6] Fig. 6 is a diagram illustrating examples of waveforms of a PWM signal.
[Fig. 7] Fig. 7 is a diagram illustrating an example of a correspondence between multiple pulses and A-phase and B-phase current target values.
[Fig. 8] Fig. 8 is a diagram illustrating an example of waveforms of an A-phase current flowing through an A-phase coil and a B-phase current flowing through a B-phase coil.
[Fig. 9] Fig. 9 is a flowchart illustrating an example of a process executed by an electric valve control device. Description of Embodiments

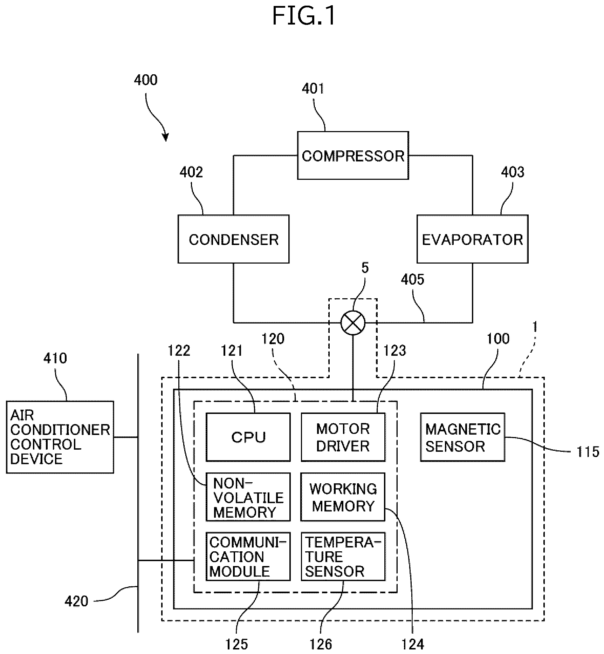

An electric valve device according to an embodiment of the present invention is described with reference to Figs. 1 to 9.

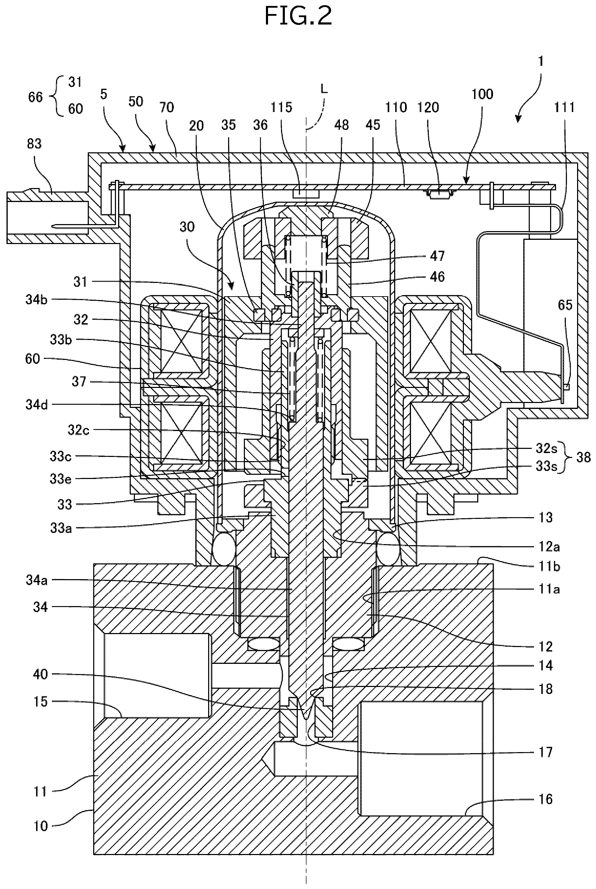

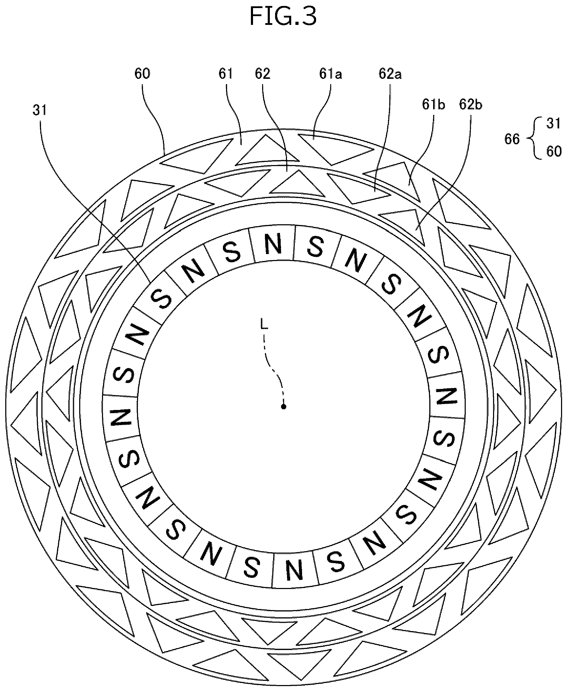

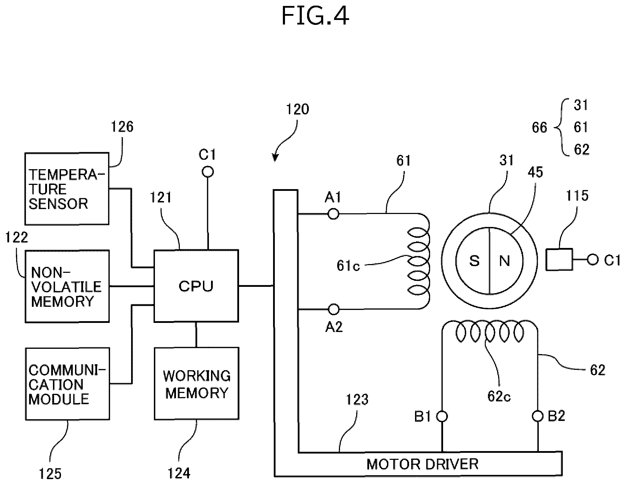

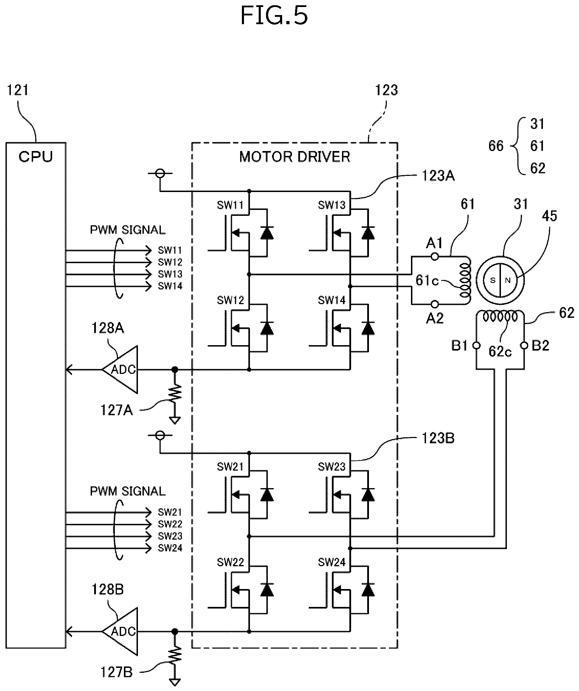

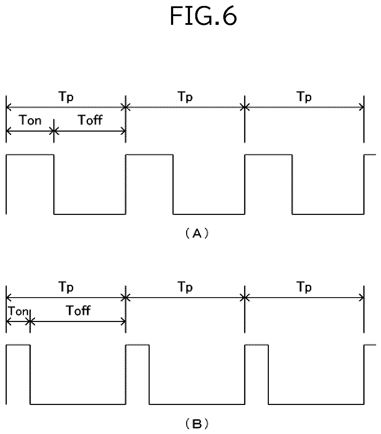

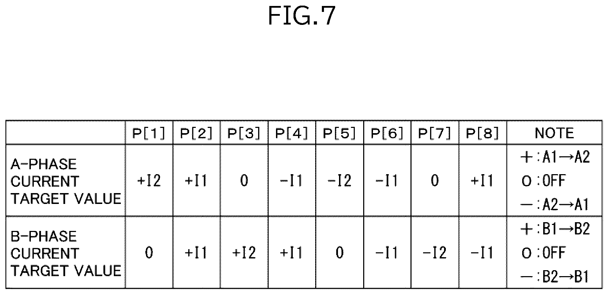

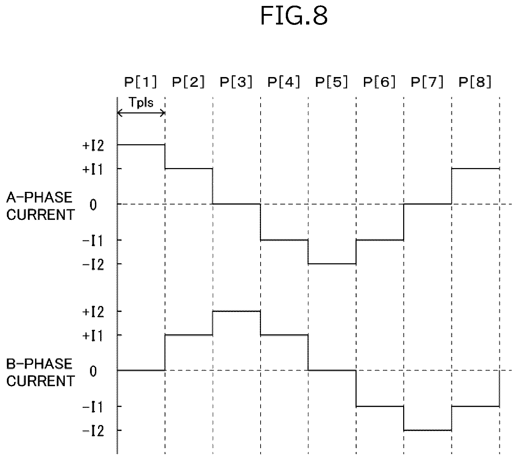

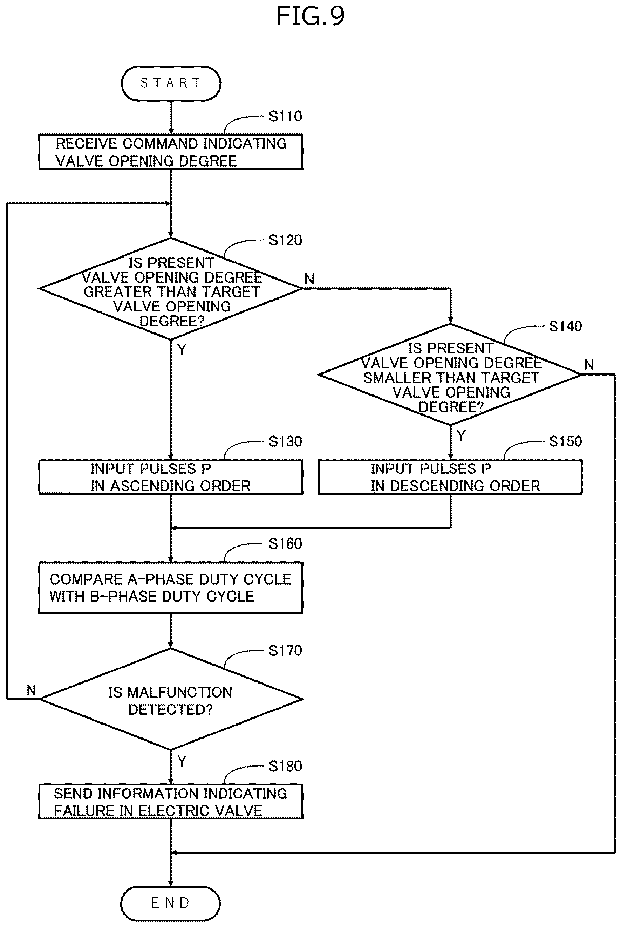

Fig. 1 is a block diagram of an air conditioning system including the electric valve device according to the embodiment of the present invention. Fig. 2 is a sectional view of the electric valve device. Fig. 3 is a diagram illustrating a magnet rotor and a stator that are included in the electric valve device. Fig. 3 schematically illustrates magnetic poles of the magnet rotor and pole teeth of the stator. The radially outward direction of the magnet rotor and the stator in Fig. 3 corresponds to an upward direction in the electric valve device. The radially inward direction of the magnet rotor and the stator in Fig. 3 corresponds to a downward direction in the electric valve device. Fig. 4 is a diagram illustrating a microcomputer, a stepping motor, and a magnetic sensor that are included in the electric valve device. Fig. 4 schematically illustrates a connection relationship between the microcomputer, the stepping motor, and the magnetic sensor. Fig. 5 is a diagram illustrating a CPU and a motor driver that are included in the microcomputer. Fig. 5 schematically illustrates a connection relationship between the CPU and the motor driver. Fig. 6 is a diagram illustrating examples of waveforms (voltage waveforms) of a PWM signal. Fig. 7 is a diagram illustrating an example of a correspondence between multiple pulses and A-phase and B-phase current target values. Fig. 8 is a diagram illustrating an example of waveforms of an A-phase current flowing through an A-phase coil and a B-phase current flowing through a B-phase coil. Fig. 9 is a flowchart illustrating an example of a process executed by an electric valve control device.

An electric valve device 1 according to the embodiment includes an electric valve 5 and the electric valve control device. The electric valve control device is simply referred to as a control device 100.

For example, the electric valve device 1 is installed in an air conditioning system 400 in Fig. 1. The air conditioning system 400 includes a compressor 401, a condenser 402, the electric valve device 1 (the electric valve 5), and an evaporator 403, which are connected in this order by a pipe 405. The air conditioning system 400 includes an air conditioner control device 410. The air conditioner control device 410 is an external device. The air conditioner control device 410 is connected to the electric valve device 1 (the control device 100) via a communication bus 420 and is able to communicate with the electric valve device 1. The air conditioner control device 410 utilizes the electric valve device 1 to control the flow rate of refrigerant flowing through the pipe 405.

As illustrated in Fig. 2, the electric valve 5 includes a valve body 10, a can 20, a driving mechanism 30, a valve member 40, a permanent magnet 45, and a stator unit 50.

The valve body 10 is, for example, made of a metal, such as an aluminum alloy. The valve body 10 includes a body member 11, a supporting member 12, and a connection member 13. The body member 11 has a rectangular parallelepiped shape. The body member 11 has a mounting hole 11a. The mounting hole 11a is provided in an upper surface 11b of the body member 11. The supporting member 12 has a circular cylindrical shape. The lower part of the supporting member 12 is disposed in the mounting hole 11a. The supporting member 12 is mounted on the body member 11 by a screw structure. The upper part of the supporting member 12 projects from the upper surface 11b of the body member 11. The body member 11 has a valve chamber 14, flow channels 15 and 16, a valve port 17, and a valve seat 18. The flow channel 15 is connected to the valve chamber 14. The flow channel 16 is connected to the valve chamber 14 through the valve port 17. The valve seat 18 encloses the valve port 17 in the valve chamber 14. The connection member 13 has a circular annular plate-like shape. The upper part of the supporting member 12 is bonded to the inner peripheral edge of the connection member 13.

The can 20 is, for example, made of a metal, such as stainless steel. The can 20 has a circular cylindrical shape. The can 20 is closed at the upper end and is open at the lower end. The lower end of the can 20 is bonded to the outer peripheral edge of the connection member 13.

The driving mechanism 30 moves the valve member 40 in an up-and-down direction (a direction of an axis L). The driving mechanism 30 includes a magnet rotor 31, a valve stem holder 32, a guide bush 33, and a valve stem 34.

The magnet rotor 31 has a circular cylindrical shape. The outer diameter of the magnet rotor 31 is slightly smaller than the inner diameter of the can 20. A small gap is formed between the inner circumferential surface of the can 20 and the outer circumferential surface of the magnet rotor 31. The magnet rotor 31 has a plurality of magnetic poles (a plurality of north (N) poles and a plurality of south (S) poles). The N poles and the S poles are disposed on the outer circumferential surface of the magnet rotor 31. The N poles and the S poles extend in the up-and-down direction. The N poles and the S poles are alternately arranged at regular intervals in the circumferential direction. In the embodiment, the magnet rotor 31 has twelve N poles and twelve S poles. The interval (the angle) between the N pole and the S pole adjacent to each other is 15 degrees.

The valve stem holder 32 has a circular cylindrical shape. The valve stem holder 32 is closed at the upper end and is open at the lower end. A supporting ring 35 is secured to the upper part of the valve stem holder 32. The supporting ring 35 connects the magnet rotor 31 and the valve stem holder 32. The valve stem holder 32 rotates together with the magnet rotor 31. An internal thread 32c is provided on the inner circumferential surface of the valve stem holder 32.

The guide bush 33 integrally includes a first circular cylindrical portion 33a and a second circular cylindrical portion 33b. The outer diameter of the second circular cylindrical portion 33b is smaller than that of the first circular cylindrical portion 33a. The second circular cylindrical portion 33b is coaxially connected to the upper end of the first circular cylindrical portion 33a. An external thread 33c is provided on the outer circumferential surface of the second circular cylindrical portion 33b. The external thread 33c is screwed into the internal thread 32c of the valve stem holder 32. The first circular cylindrical portion 33a is press-fitted into a fitting hole 12a provided in the supporting member 12 of the valve body 10. The guide bush 33 is coupled to the valve body 10.

A movable stopper 32s is secured to the valve stem holder 32. A fixed stopper 33s is secured to the first circular cylindrical portion 33a of the guide bush 33. When the movable stopper 32s comes into contact with the fixed stopper 33s, rotation of the valve stem holder 32 (i.e., the magnet rotor 31) in a valve closing direction is restricted. The movable stopper 32s and the fixed stopper 33s are members of a stopper mechanism 38. The stopper mechanism 38 restricts rotation of the magnet rotor 31 in the valve closing direction.

The valve stem 34 integrally includes a first part 34a and a second part 34b. The first part 34a and the second part 34b each have a circular columnar shape. The diameter of the second part 34b is smaller than that of the first part 34a. The second part 34b is coaxially connected to the upper end of the first part 34a. The second part 34b extends through the valve stem holder 32. A push nut 36 as a retainer is mounted on the second part 34b. The valve stem 34 is disposed inside the guide bush 33 and inside the supporting member 12. The lower end of the first part 34a is disposed in the valve chamber 14. The valve stem 34 has a step portion 34d. The step portion 34d is disposed in the part where the second part 34b is connected to the first part 34a. A valve closing spring 37 is disposed between the step portion 34d and the valve stem holder 32. The valve closing spring 37 is a compression coil spring. The valve closing spring 37 pushes the valve stem 34 downward.

The valve member 40 is disposed in the valve chamber 14. The valve member 40 faces the valve port 17 in the up-and-down direction. The valve member 40 opens and closes the valve port 17. The valve member 40 is connected to the lower end of the valve stem 34. For example, the valve stem 34 and the valve member 40 are integrally formed by cutting a workpiece with a circular columnar shape.

The permanent magnet 45 is disposed above the magnet rotor 31 inside the can 20. The permanent magnet 45 has a circular annular plate-like shape. The permanent magnet 45 has an N pole and an S pole. The N pole and the S pole radially face each other. The permanent magnet 45 is supported by a guide 46 mounted on the supporting ring 35. The guide 46 supports the permanent magnet 45 movably in the up-and-down direction relative to the guide 46. The rotation of the magnet rotor 31 is transmitted to the permanent magnet 45 via the guide 46. The permanent magnet 45 rotates together with the magnet rotor 31. A supporting spring 47 is disposed between the permanent magnet 45 and the guide 46. The supporting spring 47 is a compression coil spring. The supporting spring 47 pushes the permanent magnet 45 upward. A slider 48 is fitted into the permanent magnet 45. The slider 48 projects from the upper surface of the permanent magnet 45. The slider 48 is, for example, made of an engineering plastic with a relatively small coefficient of friction.

The permanent magnet 45 is pushed upward by the supporting spring 47, ensuring constant contact between the slider 48 and the inner surface of the can 20. The position of the permanent magnet 45 in the up-and-down direction is maintained even though a screw-feed action of the internal thread 32c of the valve stem holder 32 and the external thread 33c of the guide bush 33 moves the magnet rotor 31 in the up-and-down direction.

The stator unit 50 includes a stator 60 and a housing 70.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point downward, and the tip ends of the pole teeth 61b point upward. The pole teeth 61a and 61b are alternately arranged at regular intervals in the circumferential direction. In the embodiment, the A-phase stator 61 includes twelve pole teeth 61a and twelve pole teeth 61b. The angle between the pole tooth 61a and the pole tooth 61b adjacent to each other is 15 degrees. The A-phase stator 61 includes an A-phase coil 61c. When the A-phase coil 61c is energized, the pole teeth 61a and the pole teeth 61b have opposite polarities.

The B-phase stator 62 includes a plurality of claw-pole type pole teeth 62a and 62b in the inner circumference. The tip ends of the pole teeth 62a point downward, and the tip ends of the pole teeth 62b point upward. The pole teeth 62a and 62b are alternately arranged at regular intervals in the circumferential direction. In the embodiment, the B-phase stator 62 includes twelve pole teeth 62a and twelve pole teeth 62b. The angle between the pole tooth 62a and the pole tooth 62b adjacent to each other is 15 degrees. The B-phase stator 62 includes a B-phase coil 62c. When the B-phase coil 62c is energized, the pole teeth 62a and the pole teeth 62b have opposite polarities. The B-phase stator 62 has the same (including substantially the same) configuration as the A-phase stator 61. The designed impedance (the resistance and the inductance) of the B-phase coil 62c is equal to that of the A-phase coil 61c. In other words, when the A-phase coil 61c and the B-phase coil 62c are normal, the impedance of the B-phase coil 62c is equal to the impedance of the A-phase coil 61c.

The A-phase stator 61 is disposed coaxially with the B-phase stator 62. The A-phase stator 61 is in contact with the B-phase stator 62. When viewed in the direction of the axis L, the angle between the pole tooth 61a of the A-phase stator 61 and the pole tooth 62a of the B-phase stator 62 adjacent to each other is 7.5 degrees. The A-phase coil 61c and the B-phase coil 62c are connected to terminals 65.

The housing 70 is made of a synthetic resin. The housing 70 has a rectangular parallelepiped box shape. The housing 70 houses the stator 60. The can 20 is located within both the stator 60 and the housing 70. The stator 60 and the magnet rotor 31 are members of a stepping motor 66 for driving the valve member 40. A connector 83 projecting in a lateral direction (a direction perpendicular to the axis L) is provided in the housing 70.

In the electric valve 5, respective central axes of the body member 11 (the valve port 17 and the valve seat 18), the supporting member 12, the connection member 13, the can 20, the magnet rotor 31, the valve stem 34, the valve member 40, the permanent magnet 45, and the stator 60 (the A-phase stator 61 and the B-phase stator 62) are aligned with the axis L.

In the electric valve 5, when the magnet rotor 31 rotates in the valve closing direction, the screw-feed action of the internal thread 32c of the valve stem holder 32 and the external thread 33c of the guide bush 33 moves the magnet rotor 31 and the valve stem holder 32 downward. The valve stem holder 32 pushes the valve stem 34 downward via the valve closing spring 37. The valve stem 34 and the valve member 40 move downward, and the valve member 40 comes into contact with the valve seat 18. At this time, the magnet rotor 31 is at a valve closing position Rc. When the magnet rotor 31 at this position further rotates in the valve closing direction, the valve closing spring 37 is compressed, and the magnet rotor 31 and the valve stem holder 32 further move downward. The valve member 40 does not move downward. When the movable stopper 32s comes into contact with the fixed stopper 33s, the rotation of the magnet rotor 31 in the valve closing direction is restricted. At this time, the magnet rotor 31 is at a reference position Rx.

In the electric valve 5, when the magnet rotor 31 rotates in a valve opening direction, the screw-feed action of the internal thread 32c of the valve stem holder 32 and the external thread 33c of the guide bush 33 moves the magnet rotor 31 and the valve stem holder 32 upward. The valve stem holder 32 pushes the push nut 36 upward. The valve stem 34 and the valve member 40 move upward, and the valve member 40 separates from the valve seat 18. When the magnet rotor 31 further rotates in the valve opening direction, the magnet rotor 31 reaches a full-open position Rz. When the magnet rotor 31 is at the full-open position Rz, the valve member 40 is positioned farthest from the valve port 17.

The control device 100 includes a control board 110, a magnetic sensor 115, and a microcomputer 120.

The control board 110 is a printed circuit board on which electronic components are mounted. The control board 110 is housed in the housing 70. The control board 110 is positioned in the lateral direction above the can 20. The terminals 65 of the stator 60 are connected to the control board 110 via wires 111. The magnetic sensor 115 and the microcomputer 120 are mounted on the control board 110.

The magnetic sensor 115 and the permanent magnet 45 are arranged in the up-and-down direction with the can 20 in between. In other words, the magnetic sensor 115 faces the permanent magnet 45 in the up-and-down direction with the can 20 in between. The magnetic sensor 115 senses a magnetic field generated by the permanent magnet 45. The magnetic sensor 115 outputs a signal (an analog signal) corresponding to the rotation angle of the magnetic field. That is, the magnetic sensor 115 is a rotation angle sensor outputting a signal corresponding to the rotation angle of the permanent magnet 45 (i.e., the magnet rotor 31). One or more Hall ICs outputting a binary signal can be used as the magnetic sensor 115.

As illustrated in Figs. 1 and 4, the microcomputer 120 is, for example, a microcomputer for embedded device in which a central processing unit (a CPU 121), a non-volatile memory 122, a motor driver 123, a working memory 124, a communication module 125, a temperature sensor 126, and the like are integrated into one package. The microcomputer 120 controls the electric valve 5. A non-volatile memory, a working memory, a communication module, a motor driver, and a temperature sensor may be separate electronic components that are externally connected to the microcomputer 120.

The CPU 121 executes a program stored in the non-volatile memory 122 to function as various function units. The non-volatile memory 122 stores the present position of the magnet rotor 31 immediately before the CPU 121 is powered off. When the CPU 121 is powered on, the CPU 121 reads the present position of the magnet rotor 31 from the non-volatile memory 122. The working memory 124 stores variables used by the function units. The communication module 125 is connected to the air conditioner control device 410 via the communication bus 420. The temperature sensor 126 outputs a signal corresponding to an ambient temperature K of the microcomputer 120 (i.e., air temperature inside the housing 70). The motor driver 123 is connected to the stepping motor 66. Specifically, as illustrated in Fig. 4, the motor driver 123 is connected to the A-phase coil 61c and the B-phase coil 62c. The motor driver 123 supplies currents to the A-phase coil 61c and the B-phase coil 62c.

As illustrated in Fig. 5, the motor driver 123 includes H-bridge circuits 123A and 123B. The motor driver 123 uses the bipolar method to operate the stepping motor 66.

The H-bridge circuit 123A is connected to the A-phase coil 61c. The H-bridge circuit 123A includes switches SW11, SW12, SW13, and SW14. When a current flows from a terminal A1 to a terminal A2 in the A-phase coil 61c, the switches SW11 and SW14 are turned on and the switches SW12 and SW13 are turned off. When a current flows from the terminal A2 to the terminal A1 in the A-phase coil 61c, the switches SW12 and SW13 are turned on and the switches SW11 and SW14 are turned off.

The H-bridge circuit 123A is connected to the reference potential (GND) via a current sensing resistor 127A. A voltage Va corresponding to the current (an A-phase current Ia) supplied to the A-phase coil 61c is generated between terminals of the current sensing resistor 127A. The terminal of the current sensing resistor 127A is connected to the CPU 121 via an amplifier that is not illustrated and an analog-to-digital converter 128A. The CPU 121 inputs a pulse width modulation (PWM) signal to the switches SW11, SW12, SW13, and SW14. The CPU 121 adjusts the duty cycle (an A-phase duty cycle Da) of the PWM signal input to the switches SW11, SW12, SW13, and SW14 so that the voltage Va corresponds to an A-phase current target value Ita. The CPU 121 uses a PWM method to control the A-phase current Ia.

The H-bridge circuit 123B is connected to the B-phase coil 62c. The H-bridge circuit 123B includes switches SW21, SW22, SW23, and SW24. When a current flows from a terminal B1 to a terminal B2 in the B-phase coil 62c, the switches SW21 and SW24 are turned on and the switches SW22 and SW23 are turned off. When a current flows from the terminal B2 to the terminal B1 in the B-phase coil 62c, the switches SW22 and SW23 are turned on and the switches SW21 and SW24 are turned off.

The H-bridge circuit 123B is connected to the reference potential (GND) via a current sensing resistor 127B. A voltage Vb corresponding to the current (a B-phase current Ib) supplied to the B-phase coil 62c is generated between terminals of the current sensing resistor 127B. The terminal of the current sensing resistor 127B is connected to the CPU 121 via an amplifier that is not illustrated and an analog-to-digital converter 128B. The CPU 121 inputs the PWM signal to the switches SW21, SW22, SW23, and SW24. The CPU 121 adjusts the duty cycle (a B-phase duty cycle Db) of the PWM signal input to the switches SW21, SW22, SW23, and SW24 so that the voltage Vb corresponds to a B-phase current target value Itb. The CPU 121 uses the PWM method to control the B-phase current Ib.

During a pulse period Tp, the PWM signal is either on, off, or toggled between on and off. The pulse period Tp is predetermined. The duty cycle of the PWM signal is the ratio (Ton/Tp) of the on-time Ton of the PWM signal to the pulse period Tp. When the duty cycle is 0%, the PWM signal is off throughout the pulse period Tp. When the duty cycle is 30%, the PWM signal is on for 30% of the pulse period Tp and off for 70% of the pulse period Tp. When the duty cycle is 100%, the PWM signal is on throughout the pulse period Tp.

When currents flowing through the A-phase coil 61c have the same magnitude (absolute value), the A-phase duty cycles Da for these currents are the same, even though these currents flow in opposite directions. The direction of the current is either from the terminal A1 to the terminal A2 or from the terminal A2 to the terminal A1. An occurrence of a malfunction in the A-phase coil 61c changes the impedance of the A-phase coil 61c (the impedance between the terminals A1 and A2). The malfunction may involve a short circuit, a layer short circuit, or a disconnection. A change in the impedance of the A-phase coil 61c affects the time required for a predetermined amount of current to flow through the A-phase coil 61c. Consequently, when the malfunction occurs in the A-phase coil 61c, the on-time Ton changes, affecting the A-phase duty cycle Da. For example, when the impedance of the A-phase coil 61c decreases, the rise and fall times of the current flowing through the A-phase coil 61c in correspondence with the PWM signal decrease, allowing the predetermined amount of current to flow in a shorter time. Therefore, the on-time Ton decreases. The rise time is the duration during which the current increases from zero to the maximum value, and the fall time is the duration during which the current decreases from the maximum value to zero. Fig. 6A schematically illustrates a waveform (a voltage waveform) of the PWM signal before a short circuit occurs, and Fig. 6B schematically illustrates a waveform of the PWM signal after the short circuit occurs. The behavior in the B-phase coil 62c is the same as in the A-phase coil 61c.

The magnet rotor 31 is rotated by pulses P (pulses P[1] to P[8]) input to the stepping motor 66. Specifically, the magnet rotor 31 is rotated by the currents, corresponding to the pulses P, supplied to the stator 60 of the stepping motor 66. In this specification, "inputting pulses P to the stepping motor 66" is synonymous with "supplying currents corresponding to pulses P to the stator 60 of the stepping motor 66". The pulses P have a sequential order and are repeatedly input to the stepping motor 66 in either ascending or descending order.

The A-phase current target value Ita and the B-phase current target value Itb are set for each of the pulses P. Fig. 7 illustrates a correspondence between the pulses P, the A-phase current target value Ita, and the B-phase current target value Itb. Fig. 8 schematically illustrates current waveforms of the A-phase current Ia and the B-phase current Ib flowing in correspondence with the sequential order of the pulses P. In Fig. 8, the A-phase current Ia has the same magnitude and direction as the A-phase current target value Ita, and the B-phase current Ib has the same magnitude and direction as the B-phase current target value Itb. In Figs. 7 and 8, signs (+/-) indicate the direction in which the current flows. "+" indicates the direction from the terminal A1 to the terminal A2 or from the terminal B1 to the terminal B2. "-" indicates the direction from the terminal A2 to the terminal A1 or from the terminal B2 to the terminal B1. "0" indicates that no current flows (OFF).

In the embodiment, "+I2" is set for pulse P[1] as the A-phase current target value Ita, and "0" is set for pulse P[1] as the B-phase current target value Itb.

"+I1" is set for pulse P[2] as the A-phase current target value Ita, and "+I1" is set for pulse P[2] as the B-phase current target value Itb.

"0" is set for pulse P[3] as the A-phase current target value Ita, and "+I2" is set for pulse P[3] as the B-phase current target value Itb.

"-I1" is set for pulse P[4] as the A-phase current target value Ita, and "+I1" is set for pulse P[4] as the B-phase current target value Itb.

"-I2" is set for pulse P[5] as the A-phase current target value Ita, and "0" is set for pulse P[5] as the B-phase current target value Itb.

"-I1" is set for pulse P[6] as the A-phase current target value Ita, and "-I1" is set for pulse P[6] as the B-phase current target value Itb.

"0" is set for pulse P[7] as the A-phase current target value Ita, and "-I2" is set for pulse P[7] as the B-phase current target value Itb.

"+I1" is set for pulse P[8] as the A-phase current target value Ita, and "-I1" is set for pulse P[8] as the B-phase current target value Itb.

Currents indicated as "+I2" and "-I2" have the same magnitude and flow in opposite directions.

Currents indicated as "+I1" and "-I1" have the same magnitude and flow in opposite directions.

Currents indicated as "+I2" and "+I1" have different magnitudes and flow in the same direction.

Pulses P[1] to P[8] are input to the stepping motor 66 in order.

When the pulses P are input to the stepping motor 66 in ascending order (in the order from P[1] to P[8]), the magnet rotor 31 rotates in the valve closing direction (clockwise in Fig. 3). Specifically, when the CPU 121 supplies the A-phase current Ia, which is controlled to match the A-phase current target value Ita set for each pulse P, to the A-phase coil 61c in the sequential order of the pulses P (ascending order) and the B-phase current Ib, which is controlled to match the B-phase current target value Itb set for each pulse P, to the B-phase coil 62c in the sequential order of the pulses P (ascending order), the magnet rotor 31 rotates in the valve closing direction.

When the pulses P are input to the stepping motor 66 in descending order (in the order from P[8] to P[1]), the magnet rotor 31 rotates in the valve opening direction (counterclockwise in Fig. 3). Specifically, when the CPU 121 supplies the A-phase current Ia, which is controlled to match the A-phase current target value Ita set for each pulse P, to the A-phase coil 61c in the sequential order of the pulses P (descending order) and the B-phase current Ib, which is controlled to match the B-phase current target value Itb set for each pulse P, to the B-phase coil 62c in the sequential order of the pulses P (descending order), the magnet rotor 31 rotates in the valve opening direction.

"The A-phase current Ia matches the A-phase current target value Ita" means that the magnitude and direction of the A-phase current Ia are the same as those of the A-phase current target value Ita. "The B-phase current Ib matches the B-phase current target value Itb" means that the magnitude and direction of the B-phase current Ib are the same as those of the B-phase current target value Itb.

In the embodiment, the excitation mode of the stepping motor 66 is 1-2-phase excitation. The step angle of the stepping motor 66 is 3.75 degrees. When the magnet rotor 31 is at the reference position Rx, the movable stopper 32s is in contact with the fixed stopper 33s, thereby restricting the rotation of the magnet rotor 31 in the valve closing direction. The number (an initialization number) of pulses to rotate the magnet rotor 31 from the reference position Rx to the full-open position Rz is 500.

When the magnet rotor 31 rotates, the permanent magnet 45 also rotates, and the signal from the magnetic sensor 115 changes. When the magnet rotor 31 does not rotate, the permanent magnet 45 also does not rotate, and the signal from the magnetic sensor 115 does not change. Consequently, the control device 100 can determine whether the magnet rotor 31 rotates, based on the signal from the magnetic sensor 115.

An example of a process of the control device 100 is described below with reference to the flowchart in Fig. 9.

When the control device 100 (specifically, the CPU 121) is powered on, the control device 100 reads the present position of the magnet rotor 31 (the present valve opening degree of the electric valve 5) from the non-volatile memory 122 and waits for a command transmitted from the air conditioner control device 410.

The control device 100 receives a command indicating the valve opening degree of the electric valve 5 from the air conditioner control device 410 (S110). The command contains information concerning a target valve opening degree of the electric valve 5. When the present valve opening degree is greater than the target valve opening degree (Y in S120), the control device 100 inputs the pulses P in ascending order (S130). When the present valve opening degree is smaller than the target valve opening degree (N in S120 and Y in S140), the control device 100 inputs the pulses P in descending order (S150). When the present valve opening degree is equal to the target valve opening degree (N in S120 and N in S140), the control device 100 finishes the process and waits for the following command.

In response to pulse P[1] being input, the control device 100 inputs the PWM signal to the H-bridge circuit 123A so that the A-phase current Ia supplied to the A-phase coil 61c matches "+I2" and inputs the PWM signal to the H-bridge circuit 123B so that the B-phase current Ib supplied to the B-phase coil 62c matches "0". The control device 100 stores the duty cycle (the A-phase duty cycle Da[1]) of the PWM signal input to the H-bridge circuit 123A to the working memory 124. The control device 100 stores the duty cycle (the B-phase duty cycle Db[1]) of the PWM signal input to the H-bridge circuit 123B to the working memory 124. The duty cycle stored in the working memory 124 is, for example, the average of the duty cycles during an input period Tpls of pulse P or a duty cycle obtained after the PWM signal stabilizes (such as during a period with a small variation of the duty cycle, like the second half of the input period Tpls of pulse P).

In response to pulse P[2] being input, the control device 100 inputs the PWM signal to the H-bridge circuit 123A so that the A-phase current Ia supplied to the A-phase coil 61c matches "+I1" and inputs the PWM signal to the H-bridge circuit 123B so that the B-phase current Ib supplied to the B-phase coil 62c matches "+I1". The control device 100 stores the duty cycle (the A-phase duty cycle Da[2]) of the PWM signal input to the H-bridge circuit 123A to the working memory 124. The control device 100 stores the duty cycle (the B-phase duty cycle Db[2]) of the PWM signal input to the H-bridge circuit 123B to the working memory 124.

In response to pulse P[3] being input, the control device 100 inputs the PWM signal to the H-bridge circuit 123A so that the A-phase current Ia supplied to the A-phase coil 61c matches "0" and inputs the PWM signal to the H-bridge circuit 123B so that the B-phase current Ib supplied to the B-phase coil 62c matches "+I2". The control device 100 stores the duty cycle (the A-phase duty cycle Da[3]) of the PWM signal input to the H-bridge circuit 123A to the working memory 124. The control device 100 stores the duty cycle (the B-phase duty cycle Db[3]) of the PWM signal input to the H-bridge circuit 123B to the working memory 124.

In response to pulse P[4] being input, the control device 100 inputs the PWM signal to the H-bridge circuit 123A so that the A-phase current Ia supplied to the A-phase coil 61c matches "-I1" and inputs the PWM signal to the H-bridge circuit 123B so that the B-phase current Ib supplied to the B-phase coil 62c matches "+I1". The control device 100 stores the duty cycle (the A-phase duty cycle Da[4]) of the PWM signal input to the H-bridge circuit 123A to the working memory 124. The control device 100 stores the duty cycle (the B-phase duty cycle Db[4]) of the PWM signal input to the H-bridge circuit 123B to the working memory 124.

In response to pulse P[5] being input, the control device 100 inputs the PWM signal to the H-bridge circuit 123A so that the A-phase current Ia supplied to the A-phase coil 61c matches "-I2" and inputs the PWM signal to the H-bridge circuit 123B so that the B-phase current Ib supplied to the B-phase coil 62c matches "0". The control device 100 stores the duty cycle (the A-phase duty cycle Da[5]) of the PWM signal input to the H-bridge circuit 123A to the working memory 124. The control device 100 stores the duty cycle (the B-phase duty cycle Db[5]) of the PWM signal input to the H-bridge circuit 123B to the working memory 124.

In response to pulse P[6] being input, the control device 100 inputs the PWM signal to the H-bridge circuit 123A so that the A-phase current Ia supplied to the A-phase coil 61c matches "-I1" and inputs the PWM signal to the H-bridge circuit 123B so that the B-phase current Ib supplied to the B-phase coil 62c matches "-I1". The control device 100 stores the duty cycle (the A-phase duty cycle Da[6]) of the PWM signal input to the H-bridge circuit 123A to the working memory 124. The control device 100 stores the duty cycle (the B-phase duty cycle Db[6]) of the PWM signal input to the H-bridge circuit 123B to the working memory 124.

In response to pulse P[7] being input, the control device 100 inputs the PWM signal to the H-bridge circuit 123A so that the A-phase current Ia supplied to the A-phase coil 61c matches "0" and inputs the PWM signal to the H-bridge circuit 123B so that the B-phase current Ib supplied to the B-phase coil 62c matches "-I2". The control device 100 stores the duty cycle (the A-phase duty cycle Da[7]) of the PWM signal input to the H-bridge circuit 123A to the working memory 124. The control device 100 stores the duty cycle (the B-phase duty cycle Db[7]) of the PWM signal input to the H-bridge circuit 123B to the working memory 124.

In response to pulse P[8] being input, the control device 100 inputs the PWM signal to the H-bridge circuit 123A so that the A-phase current Ia supplied to the A-phase coil 61c matches "+I1" and inputs the PWM signal to the H-bridge circuit 123B so that the B-phase current Ib supplied to the B-phase coil 62c matches "-I1". The control device 100 stores the duty cycle (the A-phase duty cycle Da[8]) of the PWM signal input to the H-bridge circuit 123A to the working memory 124. The control device 100 stores the duty cycle (the B-phase duty cycle Db[8]) of the PWM signal input to the H-bridge circuit 123B to the working memory 124.

In response to each pulse P being input, the control device 100 compares the A-phase duty cycle Da with the B-phase duty cycle Db (S160). When the control device 100 detects that no malfunction has occurred in the A-phase coil 61c and the B-phase coil 62c based on the comparison result (N in S170), the control device 100 returns to Step S120. When the control device 100 detects that the malfunction has occurred in the A-phase coil 61c or the B-phase coil 62c based on the comparison result (Y in S170), the control device 100 sends information indicating that the electric valve 5 fails to the air conditioner control device 410 (S180) and finishes the process.

A method for comparing the A-phase duty cycle Da with the B-phase duty cycle Db and a method for detecting the malfunction are described below.

When the pulses P are input in ascending order, the control device 100 compares the B-phase duty cycle Db[K] obtained in response to pulse P[K] being input with the A-phase duty cycle Da[J] obtained in response to pulse P[J] being input two pulses before pulse P[K]. The magnitude and direction of the A-phase current target value Ita set for pulse P[J] are the same as those of the B-phase current target value Itb set for pulse P[K].

Specifically, when the control device 100 obtains the B-phase duty cycle Db[1] in response to pulse P[1] being input, the control device 100 compares the B-phase duty cycle Db[1] with the A-phase duty cycle Da[7] obtained in response to pulse P[7] being input two pulses before pulse P[1].

When the control device 100 obtains the B-phase duty cycle Db[2] in response to pulse P[2] being input, the control device 100 compares the B-phase duty cycle Db[2] with the A-phase duty cycle Da[8] obtained in response to pulse P[8] being input two pulses before pulse P[2].

When the control device 100 obtains the B-phase duty cycle Db[3] in response to pulse P[3] being input, the control device 100 compares the B-phase duty cycle Db[3] with the A-phase duty cycle Da[1] obtained in response to pulse P[1] being input two pulses before pulse P[3].

When the control device 100 obtains the B-phase duty cycle Db[4] in response to pulse P[4] being input, the control device 100 compares the B-phase duty cycle Db[4] with the A-phase duty cycle Da[2] obtained in response to pulse P[2] being input two pulses before pulse P[4].

When the control device 100 obtains the B-phase duty cycle Db[5] in response to pulse P[5] being input, the control device 100 compares the B-phase duty cycle Db[5] with the A-phase duty cycle Da[3] obtained in response to pulse P[3] being input two pulses before pulse P[5].

When the control device 100 obtains the B-phase duty cycle Db[6] in response to pulse P[6] being input, the control device 100 compares the B-phase duty cycle Db[6] with the A-phase duty cycle Da[4] obtained in response to pulse P[4] being input two pulses before pulse P[6].

When the control device 100 obtains the B-phase duty cycle Db[7] in response to pulse P[7] being input, the control device 100 compares the B-phase duty cycle Db[7] with the A-phase duty cycle Da[5] obtained in response to pulse P[5] being input two pulses before pulse P[7].

When the control device 100 obtains the B-phase duty cycle Db[8] in response to pulse P[8] being input, the control device 100 compares the B-phase duty cycle Db[8] with the A-phase duty cycle Da[6] obtained in response to pulse P[6] being input two pulses before pulse P[8].

The control device 100 compares the A-phase duty cycle Da[J] with the B-phase duty cycle Db[K]. When the difference between the A-phase duty cycle Da[J] and the B-phase duty cycle Db[K] is smaller than or equal to a predetermined threshold, the control device 100 determines that no malfunction has occurred in the A-phase coil 61c and the B-phase coil 62c. The predetermined threshold is, for example, 3% to 20%. When the difference is greater than the predetermined threshold, the control device 100 determines that the malfunction has occurred in the A-phase coil 61c or the B-phase coil 62c, that is, the control device 100 detects the malfunction in the A-phase coil 61c or the B-phase coil 62c.

When the pulses P are input in descending order, the control device 100 compares the A-phase duty cycle Da[K] obtained in response to pulse P[K] being input with the B-phase duty cycle Db[J] obtained in response to pulse P[J] being input two pulses before pulse P[K]. The magnitude and direction of the A-phase current target value Ita set for pulse P[K] are the same as those of the B-phase current target value Itb set for pulse P[J].

Specifically, when the control device 100 obtains the A-phase duty cycle Da[8] in response to pulse P[8] being input, the control device 100 compares the A-phase duty cycle Da[8] with the B-phase duty cycle Db[2] obtained in response to pulse P[2] being input two pulses before pulse P[8].

When the control device 100 obtains the A-phase duty cycle Da[7] in response to pulse P[7] being input, the control device 100 compares the A-phase duty cycle Da[7] with the B-phase duty cycle Db[1] obtained in response to pulse P[1] being input two pulses before pulse P[7].

When the control device 100 obtains the A-phase duty cycle Da[6] in response to pulse P[6] being input, the control device 100 compares the A-phase duty cycle Da[6] with the B-phase duty cycle Db[8] obtained in response to pulse P[8] being input two pulses before pulse P[6].

When the control device 100 obtains the A-phase duty cycle Da[5] in response to pulse P[5] being input, the control device 100 compares the A-phase duty cycle Da[5] with the B-phase duty cycle Db[7] obtained in response to pulse P[7] being input two pulses before pulse P[5].

When the control device 100 obtains the A-phase duty cycle Da[4] in response to pulse P[4] being input, the control device 100 compares the A-phase duty cycle Da[4] with the B-phase duty cycle Db[6] obtained in response to pulse P[6] being input two pulses before pulse P[4].

When the control device 100 obtains the A-phase duty cycle Da[3] in response to pulse P[3] being input, the control device 100 compares the A-phase duty cycle Da[3] with the B-phase duty cycle Db[5] obtained in response to pulse P[5] being input two pulses before pulse P[3].

When the control device 100 obtains the A-phase duty cycle Da[2] in response to pulse P[2] being input, the control device 100 compares the A-phase duty cycle Da[2] with the B-phase duty cycle Db[4] obtained in response to pulse P[4] being input two pulses before pulse P[2].

When the control device 100 obtains the A-phase duty cycle Da[1] in response to pulse P[1] being input, the control device 100 compares the A-phase duty cycle Da[1] with the B-phase duty cycle Db[3] obtained in response to pulse P[3] being input two pulses before pulse P[1].

The control device 100 compares the A-phase duty cycle Da[K] with the B-phase duty cycle Db[J]. When the difference between the A-phase duty cycle Da[K] and the B-phase duty cycle Db[J] is smaller than or equal to the predetermined threshold, the control device 100 determines that no malfunction has occurred in the A-phase coil 61c and the B-phase coil 62c. When the difference is greater than the predetermined threshold, the control device 100 determines that the malfunction has occurred in the A-phase coil 61c or the B-phase coil 62c, that is, the control device 100 detects the malfunction in the A-phase coil 61c or the B-phase coil 62c.

In the method for comparing the A-phase duty cycle Da with the B-phase duty cycle Db described above, the control device 100 may obtain the A-phase duty cycles Da and the B-phase duty cycles Db in response to pulses P[2], P[4], P[6], and P[8] being input and compare them as follows. The A-phase current target value Ita and the B-phase current target value Itb set for pulses P[2], P[4], P[6], and P[8] have at least the same magnitude.

When the A-phase duty cycle Da[2] and the B-phase duty cycle Db[2] are obtained in response to pulse P[2] being input, the control device 100 compares the A-phase duty cycle Da[2] with the B-phase duty cycle Db[2].

When the A-phase duty cycle Da[4] and the B-phase duty cycle Db[4] are obtained in response to pulse P[4] being input, the control device 100 compares the A-phase duty cycle Da[4] with the B-phase duty cycle Db[4].

When the A-phase duty cycle Da[6] and the B-phase duty cycle Db[6] are obtained in response to pulse P[6] being input, the control device 100 compares the A-phase duty cycle Da[6] with the B-phase duty cycle Db[6].

When the A-phase duty cycle Da[8] and the B-phase duty cycle Db[8] are obtained in response to pulse P[8] being input, the control device 100 compares the A-phase duty cycle Da[8] with the B-phase duty cycle Db[8].

The electric valve device 1 according to the embodiment includes the electric valve 5 and the control device 100. The electric valve 5 includes the valve body 10 that has the valve chamber 14, the valve member 40 that is disposed in the valve chamber 14, and the stepping motor 66 for moving the valve member 40. The stepping motor 66 includes the magnet rotor 31 and the stator 60 (the A-phase stator 61 and the B-phase stator 62). The control device 100 controls the electric valve 5. The control device 100 is configured to use the PWM method to control the A-phase current Ia supplied to the A-phase coil 61c of the A-phase stator 61 and the B-phase current Ib supplied to the B-phase coil 62c of the B-phase stator 62. The control device 100 is configured to compare the A-phase duty cycle Da for the A-phase current Ia with the B-phase duty cycle Db for the B-phase current Ib to detect the malfunction in the A-phase coil 61c or the B-phase coil 62c.

For example, when the driving voltage or ambient temperature of the stepping motor 66 fluctuates, both the A-phase duty cycle Da and the B-phase duty cycle Db are affected. In this situation, the relationship between the A-phase duty cycle Da and the B-phase duty cycle Db remains unchanged. When the malfunction occurs in the A-phase coil 61c or the B-phase coil 62c, the impedance of the A-phase coil 61c or the B-phase coil 62c changes, affecting the A-phase duty cycle Da or the B-phase duty cycle Db. In this situation, the relationship between the A-phase duty cycle Da and the B-phase duty cycle Db changes. Consequently, when the control device 100 compares the A-phase duty cycle Da with the B-phase duty cycle Db and detects a change in the relationship between the A-phase duty cycle Da and the B-phase duty cycle Db, the control device 100 can determine that the malfunction has occurred in the A-phase coil 61c or the B-phase coil 62c. The relationship is, for example, indicated as the difference between the A-phase duty cycle Da and the B-phase duty cycle Db. Therefore, the control device 100 can inhibit an erroneous detection of the malfunction in the coil due to fluctuations in the driving voltage or ambient temperature of the stepping motor 66, resulting in a more accurate detection of a failure in the stepping motor 66.

The control device 100 is configured to compare the A-phase duty cycle Da for the A-phase current Ia controlled to match the A-phase current target value Ita with the B-phase duty cycle Db for the B-phase current Ib controlled to match the B-phase current target value Itb having a magnitude equal to that of the A-phase current target value Ita. With this configuration, the A-phase duty cycle Da is equal to the B-phase duty cycle Db when no malfunction occurs in the A-phase coil 61c and the B-phase coil 62c, and the A-phase duty cycle Da is not equal to the B-phase duty cycle Db when the malfunction occurs in the A-phase coil 61c or the B-phase coil 62c. Therefore, the control device 100 can use a simple process to compare the A-phase duty cycle Da with the B-phase duty cycle Db.

The control device 100 may be configured to compare the A-phase duty cycle Da for the A-phase current Ia controlled to match the A-phase current target value Ita with the B-phase duty cycle Db for the B-phase current Ib controlled to match the B-phase current target value Itb having a different magnitude from that of the A-phase current target value Ita. In this configuration, the control device 100 compares the A-phase duty cycle Da with the B-phase duty cycle Db, taking into account the difference (ratio) between the A-phase current target value Ita and the B-phase current target value Itb. For example, when the ratio (Ita/Itb) of the A-phase current target value Ita and B-phase current target value Itb is equal to 1/2 and no malfunction occurs in the A-phase coil 61c and the B-phase coil 62c, the ratio (Da/Db) of the A-phase duty cycle Da and the B-phase duty cycle Db is also 1/2. Thus, the control device 100 compares two times the value of the A-phase duty cycle Da (Da×2) with the B-phase duty cycle Db.

The control device 100 is configured to compare the A-phase duty cycle Da with the B-phase duty cycle Db when the A-phase current Ia and the B-phase current Ib are controlled so that the magnet rotor 31 rotates. With this configuration, the control device 100 can detect the malfunction in the A-phase coil 61c or the B-phase coil 62c in an ordinary process (a process in which the valve opening degree of the electric valve 5 is adjusted to the target valve opening degree, which is indicated).

The A-phase current target value Ita and the B-phase current target value Itb are set for each of the pulses P. When the A-phase current Ia matching the A-phase current target value Ita set for each of the pulses P is supplied to the A-phase coil 61c in the sequential order and the B-phase current Ib matching the B-phase current target value Itb set for each of the pulses P is supplied to the B-phase coil 62c in the sequential order, the magnet rotor 31 rotates. The control device 100 is configured to compare the A-phase duty cycle Da for the A-phase current Ia, which is controlled to match the A-phase current target value Ita set for one pulse P of the pulses P, with the B-phase duty cycle Db for the B-phase current Ib, which is controlled to match the B-phase current target value Itb set for another pulse P of the pulses P and having a magnitude equal to a magnitude of the A-phase current target value Ita set for the one pulse P. With this configuration, the control device 100 can use a simple process to compare the A-phase duty cycle Da with the B-phase duty cycle Db. Additionally, the control device 100 can detect the malfunction in the A-phase coil 61c or the B-phase coil 62c in the normal process.

The control device 100 according to the embodiment is configured to detect the malfunction in the A-phase coil 61c or the B-phase coil 62c in the normal process, but the present invention is not limited to this configuration. The control device 100 may be configured to detect the malfunction in the A-phase coil 61c or the B-phase coil 62c in an initializing process executed immediately after the control device 100 is powered on. For example, in the initializing process, the control device 100 inputs the PWM signal to the H-bridge circuit 123A so that the A-phase current Ia supplied to the A-phase coil 61c matches "+I2" and inputs the PWM signal to the H-bridge circuit 123B so that the B-phase current Ib supplied to the B-phase coil 62c matches "+I2". The control device 100 compares the duty cycle (the A-phase duty cycle Da) of the PWM signal input to the H-bridge circuit 123A with the duty cycle (the B-phase duty cycle Db) of the PWM signal input to the H-bridge circuit 123B. The control device 100 then detects the malfunction in the A-phase coil 61c or the B-phase coil 62c based on the comparison result.

The control device 100 according to the embodiment is configured to use a current control method to operate the electric valve 5 (the stepping motor 66) but may be configured to use a voltage control method. In a voltage control configuration, a control device 100 is configured to use a PWM method to control an A-phase voltage supplied to an A-phase coil 61c of an A-phase stator 61 and a B-phase voltage supplied to a B-phase coil 62c of a B-phase stator 62. The control device 100 is configured to compare a duty cycle (an A-phase voltage duty cycle) for the A-phase voltage with a duty cycle (a B-phase voltage duty cycle) for the B-phase voltage to detect a malfunction in the A-phase coil 61c or the B-phase coil 62c.

In the voltage control configuration, the control device 100 may be configured to compare the A-phase voltage duty cycle for the A-phase voltage controlled to match an A-phase voltage target value with the B-phase voltage duty cycle for the B-phase voltage controlled to match a B-phase voltage target value having a magnitude equal to a magnitude of the A-phase voltage target value.

In the voltage control configuration, the control device 100 may be configured to compare the A-phase voltage duty cycle with the B-phase voltage duty cycle when the A-phase voltage and B-phase voltage are controlled so that the magnet rotor 31 rotates.

The following configuration may be used in the voltage control configuration. Pulses P have a sequential order, and the A-phase voltage target value and the B-phase voltage target value are set for each of the pulses P. When the A-phase voltage matching the A-phase voltage target value set for each of the pulses P is supplied to the A-phase coil 61c in the sequential order and the B-phase voltage matching the B-phase voltage target value set for each of the pulses P is supplied to the B-phase coil 62c in the sequential order, the magnet rotor 31 rotates. The control device 100 is configured to compare the A-phase voltage duty cycle for the A-phase voltage, which is controlled to match the A-phase voltage target value set for one pulse P of the pulses P, with the B-phase voltage duty cycle for the B-phase voltage, which is controlled to match the B-phase voltage target value set for another pulse P of the pulses P and having a magnitude equal to a magnitude of the A-phase voltage target value set for the one pulse P.

"The A-phase voltage matches the A-phase voltage target value" means that the magnitude and direction of the A-phase voltage are the same as those of the A-phase voltage target value. "The B-phase voltage matches the B-phase voltage target value" means that the magnitude and direction of the B-phase voltage are the same as those of the B-phase voltage target value.

The control device 100 using the voltage control method to operate the electric valve 5 has the same (including substantially the same) functions and effects as the control device 100 described above.

In the embodiment, the control device 100 controls the electric valve 5. Alternatively, the air conditioner control device 410 may directly control the electric valve 5. In this configuration, the air conditioner control device 410 serves as an electric valve control device.

In this specification, the terms indicating shapes of members, such as "circular cylindrical" and "circular columnar", are also used for members substantially having the shapes indicated by the terms. For example, "circular cylindrical member" includes a circular cylindrical member and a substantially circular cylindrical member.

The embodiment of the present invention is described above. The present invention, however, is not limited to the embodiment. Embodiments obtained by a person skilled in the art appropriately adding, removing, or modifying components according to the embodiment described above, and an embodiment obtained by appropriately combining features of the embodiment are included in the scope of the present invention without departing from the spirit of the present invention.

### Reference Signs List

1 ... electric valve device, 5 ... electric valve, 10 ... valve body, 11 ... body member, 11a ... mounting hole, 11b ... upper surface, 12 ... supporting member, 12a ... fitting hole, 13 ... connection member, 14 ... valve chamber, 15 ... flow channel, 16 ... flow channel, 17 ... valve port, 18 ... valve seat, 20 ... can, 30 ... driving mechanism, 31 ... magnet rotor, 32 ... valve stem holder, 32c ... internal thread, 32s ... movable stopper, 33 ... guide bush, 33a ... first circular cylindrical portion, 33b ... second circular cylindrical portion, 33c ... external thread, 33e ... through hole, 33s ... fixed stopper, 34 ... valve stem, 34a ... first part, 34b ... second part, 34d ... step portion, 35 ... supporting ring, 36 ... push nut, 37 ... valve closing spring, 38 ... stopper mechanism, 40 ... valve member, 45 ... permanent magnet, 46 ... guide, 47 ... supporting spring, 48 ... slider, 50 ... stator unit, 60 ... stator, 61 ... A-phase stator, 61a ... pole tooth, 61b ... pole tooth, 61c ... A-phase coil, 62 ... B-phase stator, 62a ... pole tooth, 62b ... pole tooth, 62c ... B-phase coil, 65 ... terminal, 66 ... stepping motor, 70 ... housing, 83 ... connector, 100 ... electric valve control device, 110 ... control board, 111 ... wire, 115 ... magnetic sensor, 120 ... microcomputer, 121 ... CPU, 122 ... non-volatile memory, 123 ... motor driver, 123A ... H-bridge circuit, 123B ... H-bridge circuit, 124 ... working memory, 125 ... communication module, 126 ... temperature sensor, 127A ... current sensing resistor, 127B ... current sensing resistor, 128A ... analog-to-digital converter, 128B ... analog-to-digital converter, 400 ... air conditioning system, 401 ... compressor, 402 ... condenser, 403 ... evaporator, 405 ... pipe, 410 ... air conditioner control device, 420 ... communication bus, Ia ... A-phase current, Ib ... B-phase current, Ita ... A-phase current target value, Itb ... B-phase current target value, Da ... A-phase duty cycle, Db ... B-phase duty cycle, L ... axis, Rc ... valve closing position, Rx ... reference position, Rz ... full-open position.

## Claims

1. An electric valve control device for controlling an electric valve,
wherein the electric valve includes a valve body that has a valve chamber, a valve member that is disposed in the valve chamber, and a stepping motor for moving the valve member,
wherein the stepping motor includes a magnet rotor, an A-phase stator, and a B-phase stator,
wherein the electric valve control device is configured to use a PWM method to control an A-phase current supplied to an A-phase coil of the A-phase stator and a B-phase current supplied to a B-phase coil of the B-phase stator,
and
wherein a duty cycle for the A-phase current is referred to as an A-phase duty cycle, a duty cycle for the B-phase current is referred to as a B-phase duty cycle, and the electric valve control device is configured to compare the A-phase duty cycle with the B-phase duty cycle to detect a malfunction in the A-phase coil or the B-phase coil.

2. The electric valve control device according to Claim 1,
wherein the electric valve control device is configured to compare the A-phase duty cycle for the A-phase current with the B-phase duty cycle for the B-phase current, the A-phase current being controlled to match an A-phase current target value, the B-phase current being controlled to match a B-phase current target value having a magnitude equal to a magnitude of the A-phase current target value.

3. The electric valve control device according to Claim 1 or 2,
wherein the electric valve control device is configured to compare the A-phase duty cycle with the B-phase duty cycle when the A-phase current and the B-phase current are controlled so that the magnet rotor rotates.

4. The electric valve control device according to Claim 1,
wherein multiple pulses have a sequential order, and an A-phase current target value and a B-phase current target value are set for each of the multiple pulses,
wherein when the A-phase current matching the A-phase current target value set for each of the multiple pulses is supplied to the A-phase coil in the sequential order and the B-phase current matching the B-phase current target value set for each of the multiple pulses is supplied to the B-phase coil in the sequential order, the magnet rotor rotates, and
wherein the electric valve control device is configured to compare the A-phase duty cycle for the A-phase current with the B-phase duty cycle for the B-phase current, the A-phase current being controlled to match the A-phase current target value set for one pulse of the multiple pulses, the B-phase current being controlled to match the B-phase current target value set for another pulse of the multiple pulses and having a magnitude equal to a magnitude of the A-phase current target value set for the one pulse.

5. An electric valve control device for controlling an electric valve,
wherein the electric valve includes a valve body that has a valve chamber, a valve member that is disposed in the valve chamber, and a stepping motor for moving the valve member,
wherein the stepping motor includes a magnet rotor, an A-phase stator, and a B-phase stator,
wherein the electric valve control device is configured to use a PWM method to control an A-phase voltage supplied to an A-phase coil of the A-phase stator and a B-phase voltage supplied to a B-phase coil of the B-phase stator,
and
wherein the electric valve control device is configured to compare a duty cycle for the A-phase voltage with a duty cycle for the B-phase voltage to detect a malfunction in the A-phase coil or the B-phase coil.

6. An electric valve device comprising: the electric valve; and the electric valve control device according to Claim 1 or 5.
